# EUROPEAN PATENT APPLICATION

(11) **EP 2 871 597 A1**
(43) Date of publication of application: **13.05.2015**
(21) Application number: 14191467.1
(22) Date of filing: 03.11.2014
(51) Int. Cl.: G06Q 10/00

(54) **Project data management server and project data management program**

(30) Priority: 06.11.2013 JP 2013230514
(71) Applicant: IPS Co., Ltd., Osaka 530-0011 (JP)
(72) Inventor: Akita, Toshifumi, Osaka-shi, Osaka 530-0011 (JP)
(74) Representative: Grünecker Patent- und Rechtsanwälte PartG mbB

(57) **Abstract**

A project data management server includes a project data DB storing project data containing a project ID, process IDs, and process data such that the project ID, the process IDs, and the process data are associated with each other, supplies to a user terminal project setting screen information used for setting information about a project, receives input contents information indicating contents of user's input from the user terminal displaying a project setting screen which includes a business process list display area containing an input area to which detailed items are input from the user for each business process, and updates project data based on the received input contents information.

## Description

### BACKGROUND

### Technical Field

The present invention relates to a project data management server which is a server for operation of ERP, and provides and manages data on a project via a communication network in accordance with a request from a user terminal used by a user, and further relates to a project data management program under which the server performs functions.

### Related Art

Package software called ERP (Enterprise Resource Planning) has been the mainstream software used for building a core business system in an enterprise. The core business system incorporating ERP (enterprise resource planning system, or ERP system) integrates and manages various business processes produced in overall parts of an enterprise, and increases management efficiency. An example of this integrated management is a system which organizes jobs, resources, and labors relating to projects so as to manage the projects.

This type of project management system requires input of data for each individual process; therefore, a considerable volume of data is handled for performing input processing. Accordingly, there is still room for improvement in the efficiency of processing by a server performing information processing, and by a user of the system.

As a proposal for overcoming this problem, there is disclosed a system which intelligently caches and synchronizes data using a project management application so as to manage project data (see JP 2006-099730 A).

### SUMMARY

According to the system disclosed in JP 2006-099730 A, the processing load imposed on the server decreases. However, a user of the system is still required to perform complicated operation for selection. Accordingly, it is still desired to develop a technology capable of achieving allotment and display of data desired by a user only by simplified processing without the need for complicated operation for selection even when the volume of data to be processed (or input) is considerably large.

The present invention has been developed to solve the aforementioned problems. It is an object of the present invention to provide a technology capable of achieving allotment and display of data desired by a user without the need for complicated operation for selection in a business system (ERP system) which provides and manages data on a project via a communication network in accordance with a request from a user terminal used by the user.

A project data management server according to the present invention is a server for operation of ERP, and provides and manages data on a project via a communication network in accordance with a request issued from a user terminal used by a user. The server includes: a project data storing unit storing project data containing a project ID based on which a project produced in a business affair is uniquely identified, process IDs based on which a plurality of business processes constituting the project are uniquely identified, and process data indicating detailed contents of the corresponding business processes such that the project ID, the process IDs, and the process data are associated with each other; a project setting screen information supplying unit supplying to the user terminal project setting screen information used for setting various types of information about a project with reference to the project data in accordance with a request from the user; an input contents information receiving unit receiving input contents information from the user terminal displaying a project setting screen on a display screen of the user terminal based on the project setting screen information, which input contents information indicates contents of input to the project setting screen from the user; and a data updating unit updating the project data based on the received input contents information. The project setting screen contains a business process list display area which is an area displaying a list of a plurality of business processes constituting the project, and contains input areas to which detailed items for each business process are input.

This constitution realizes allotment and display of data desired by the user by simplified processing without the necessity of complicated selection in the business system (ERP system) which provides and manages data on a project via a communication network in accordance with a request from the user terminal used by the user.

The project data management server may be configured to further include a process data registering unit creating and registering the process data. In this case, the input contents information receiving unit may be configured to receive input contents information from the user terminal having received process data registration. The input contents information contains contents of the process data registration. In addition, the process data registering unit may be configured to create the process data based on the received input contents information containing the contents of the process data registration, and register in the project data the created process data in association with a corresponding project.

The project data may be configured to be further associated with child projects indicating projects associated with a corresponding project. The project setting screen may be configured to contain a child project list display area displaying a list of the child projects. The project setting screen information supplying unit may be configured to supply to the user terminal project setting screen information used for setting various types of information about the child projects in accordance with a request from the user terminal having received selection of the desired child project.

The project setting screen may be configured to contain a project consolidation information display area displaying data on at least one of a profit, a planned cost corresponding to an estimated cost for investment, and an actual cost corresponding to an invested sum after completion of the corresponding process, as data after consolidation of associated projects containing the child projects.

The project data management server may be configured to further include a performance input screen information supplying unit supplying to the user terminal performance input screen information used for inputting performance data in accordance with a request from the user. In this case, the input contents information receiving unit may be configured to further receive input contents information from the user terminal displaying a performance input screen on the display screen of the user terminal based on the performance input screen information. The input contents information indicates contents of performance input to the performance input screen from the user for respective business processes. In addition, the data updating unit may be configured to update the project data based on the received input contents information.

The project data management server may be configured to further include a process allotment screen information supplying unit supplying to the user terminal process allotment screen information used for allotting registered process data to a project with reference to the process data in accordance with a request from the user. In this case, the input contents information receiving unit may be configured to further receive input contents information from the user terminal displaying a process allotment screen on the display screen of the user terminal based on the process allotment screen information. The input contents information indicates contents of business process selection input to the process allotment screen from the user. In addition, the data updating unit may be configured to update the project data based on the received input contents information.

The project data management server may be configured to further include a process data storing unit storing the process data not associated with the project data, and an allotment screen information supplying unit supplying to the user terminal allotment screen information used for allotting process data in accordance with a request from the user. In this case, the input contents information receiving unit may be configured to further receive input contents information from the user terminal displaying an allotment screen on the display screen of the user terminal based on the allotment screen information. The input contents information indicates contents of process allotment input to the allotment screen from the user for allotting a process to a corresponding project. In addition, the data updating unit may be configured to update the project data based on the received input contents information.

The project data management server may be configured to further include a project table screen information supplying unit supplying to the user terminal project table screen information used for displaying a project table screen showing a list of the process data with reference to the project data in accordance with a request from the user presenting the project ID. In this case, the project table screen contains a process data list display area displaying a list of outlines of latest process data updated by the data updating unit for each property of business processes.

A project data management program according to the present invention allows operation of ERP, and allows a project data management server to provide and manage data on a project via a communication network in accordance with a request issued from a user terminal used by a user. Under the project data management program the project data management server which includes a project data storing unit storing project data containing a project ID based on which a project produced in a business affair is uniquely identified, process IDs based on which a plurality of business processes constituting the project are uniquely identified, process data indicating detailed contents of the corresponding business processes such that the project ID, the process IDs, and the process data are associated with each other executes: a project setting screen information supplying process supplying to the user terminal project setting screen information used for setting various types of information about a project with reference to the project data in accordance with a request from the user; an input contents information receiving process receiving input contents information from the user terminal displaying a project setting screen on a display screen of the user terminal based on the project setting screen information, which input contents information indicates contents of input to the project setting screen from the user, wherein the project setting screen contains a business process list display area which is an area displaying a list of a plurality of business processes constituting the project, and contains input areas to which detailed items for each business process are input; and a data updating process updating the project data based on the received input contents information.

The present invention achieves allotment and display of data desired by a user without the need for complicated operation for selection in a business system (ERP system) which provides and manages data on a project via a communication network in accordance with a request from a user terminal used by the user.

### BRIEF DESCRIPTION OF DRAWINGS

FIG. 1 is a block diagram illustrating a constitution example of a project data management system;
FIG. 2 is a block diagram illustrating a constitution example of a project data management server;
FIG. 3A and Fig. 3B are figures illustrating a constitution example of project data;
FIG. 4 is a flowchart showing an example of a project data management process;
FIG. 5 is a flowchart showing an example of a project table display process;
FIG. 6 is a figure illustrating a constitution example of a project table screen;
FIG. 7 is a flowchart showing a project outline display process;
FIG. 8 is a figure illustrating a constitution example of a project outline screen;
FIG. 9 is a flowchart showing an example of a project specification display process;
FIG. 10 is a figure illustrating a constitution example of a project specification screen;
FIG. 11 is a flowchart showing an example of a performance input process;
FIG. 12 is a figure illustrating a constitution example of a performance input screen;
FIG. 13 is a figure illustrating a constitution example of an updated project specification screen;
FIG. 14 is a flowchart showing an example of a process allotment process;
FIG. 15 is a figure illustrating a constitution example of a process switching screen; and
FIG. 16 is a figure illustrating a constitution example of a project table screen.

### DETAILED DESCRIPTION

An embodiment according to the present invention is hereinafter described with reference to the drawings.

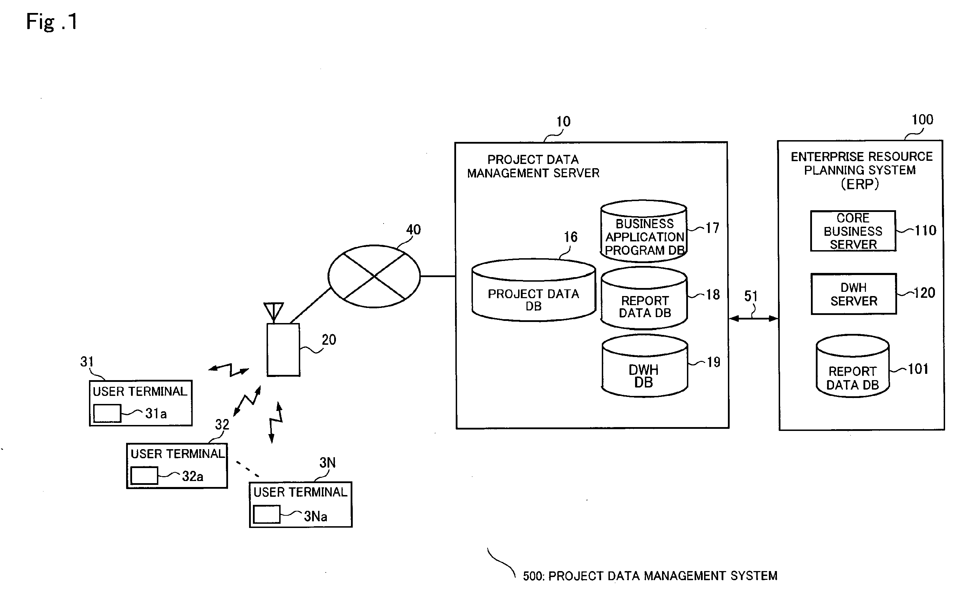

FIG. 1 is a block diagram showing a constitution example of a project data management system 500 according to the embodiment of the present invention. As illustrated in FIG. 1, the project data management system 500 includes a project data management server 10, a relay 20, a plurality of user terminals 31 to 3N (N: arbitrary positive integer), and an enterprise resource planning system 100.

The project data management server 10 is connected with each of the user terminals 31 to 3N via a communication network 40 such as the Internet, and the relay 20. The project data management server 10 is connected with the enterprise resource planning system 100 via a communication network 51 such as a LAN (Local Area Network) and a dedicated communication line. The user terminals 31 to 3N may be configured to be either communicable with each other via the project data management server 10, or incommunicable with each other.

The enterprise resource planning system 100 performs functions as an enterprise resource planning system by communicating with (transmitting and receiving various types of information to and from) the project data management server 10. Known technologies are applied to a core business server 110 and others included in the enterprise resource planning system 100.

It is assumed that the core business server 110 and a DWH server 120 are connected with each other via a dedicated communication line. The core business server 110 is a server managed by a manager of the project data management system 500, for example, and performs various types of functions for managing information used for managing project data, and report data on various types of business affairs (such as creation, update, and saving of information). The core business server 110 is constituted by an ordinary information processing device equipped with an OS (Operating System) and a relational DB.

The term "report" in this context is a general term referring to books, vouchers and the like. Books herein are materials where items concerning receipts and disbursements of money and articles are entered, while vouchers herein are data based on which books are created, and are evidences for business transactions or the like.

The core business server 110 executes various types of processes under a business application program. Examples of the business application program herein include a sales task management program, a purchase task management program, a production management program, a financial accounting management program, and a managerial accounting management program.

The DWH server 120 is a server managed by a system manager of this system, for example, and performs various types of functions for realizing a data warehouse. The data warehouse in this context refers to a system which analyzes relevance between respective items in business data such as report data accumulated in the time-series order. The DWH server 120 has a function of converting files in CSV (Comma Separated Values) format transferred from the core business server 110 into data in a predetermined data format, for example, and registering respective types of the converted data in predetermined storing areas. The DWH server 120 may be configured to extract data corresponding to respective storing areas from data in the state of CSV format without converting data format.

The report data DB 101 is a storage medium which stores various types of report data collected, sorted, or processed in other ways by various types of information processing under various types of business application programs (programs stored in a not-shown business application program DB included in the enterprise resource planning system 100). For example, voucher data corresponding to order acceptance slips in the report data DB 101 is associated with order acceptance slip header information, order acceptance slip specification information, delivery date schedule and the like, and stored in a structure searchable based on keys such as slip numbers.

The core business server 110 has a function of converting various types of data stored in the report data DB 101 into data in CSV format in accordance with predetermined extraction conditions, and transmitting the converted data to the project data management server 10. According to this embodiment, the core business server 110 transfers data files converted into CSV format using FTP (File Transfer Protocol) to the project data management server 10.

The project data management server 10 is a server for operation of ERP, and provides and manages data on a project via a communication network in accordance with a request from a user terminal used by a user. The project data management server 10 is constituted by an information processing device such as a WWW server, and managed by the system manager of the project data management system 500.

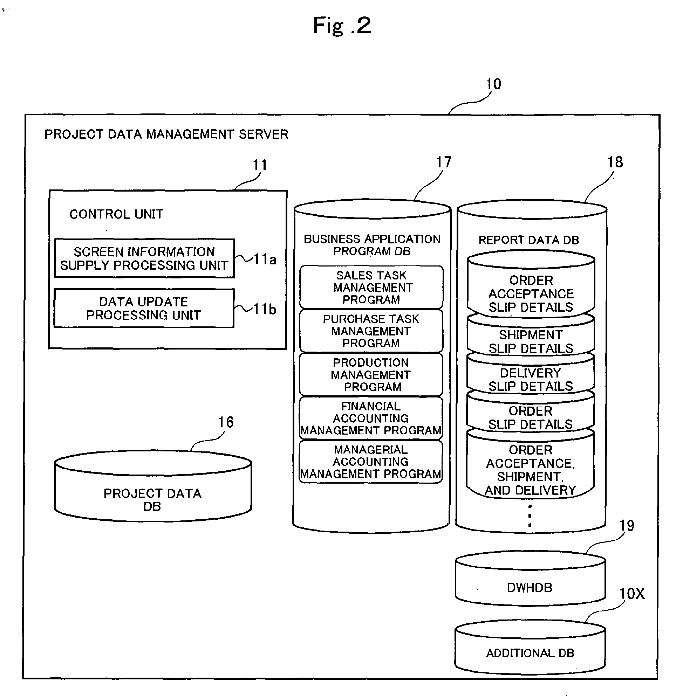

FIG. 2 is a block diagram illustrating a constitution example of the project data management server 10. As illustrated in FIG. 2, the project data management server 10 includes a control unit 11 performing various types of controls, a project data DB 16, a business application program DB 17, a report data DB 18, a DWH DB 19, and an additional DB 10X storing various types of data necessary for performing functions as an ordinary core business server (such as data used by various types of programs stored in the business application program DB 17). The additional DB 10X is a part not relating to the present invention; therefore, detailed explanation thereof is omitted herein.

The control unit 11 includes a screen information supply processing unit 11a, and a data update processing unit 11b.

The screen information supply processing unit 11a executes processes such as a process for creating information on screens (project setting screen information, performance input screen information, process switching screen information, and process allotment screen information, for example) displayed on a display screen of each of the user terminals 31 to 3N, and supplying the created information on screens to the user terminals 31 to 3N.

The data update processing unit 11b has a function of executing a process for updating databases such as project data and various types of data stored in a memory unit based on data transmitted from the user terminals 31 to 3N.

The project data DB 16 is data containing project IDs based on which corresponding projects produced in a business are uniquely identified, process IDs based on which a plurality of business processes constituting each of corresponding projects are uniquely identified, and process data showing detailed contents of each of corresponding business processes such that the respective IDs and data are associated with each other.

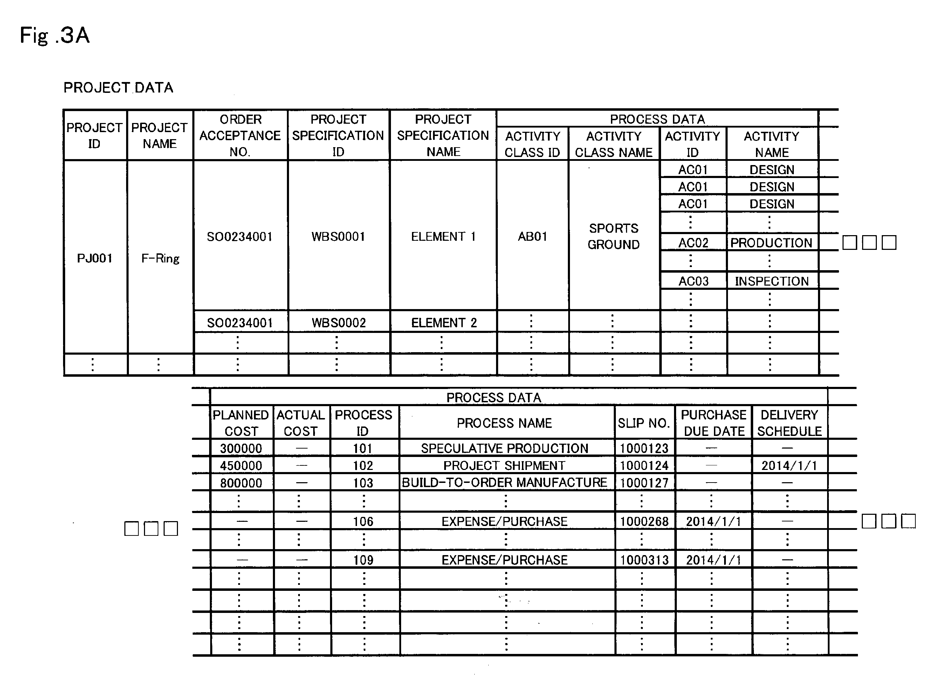

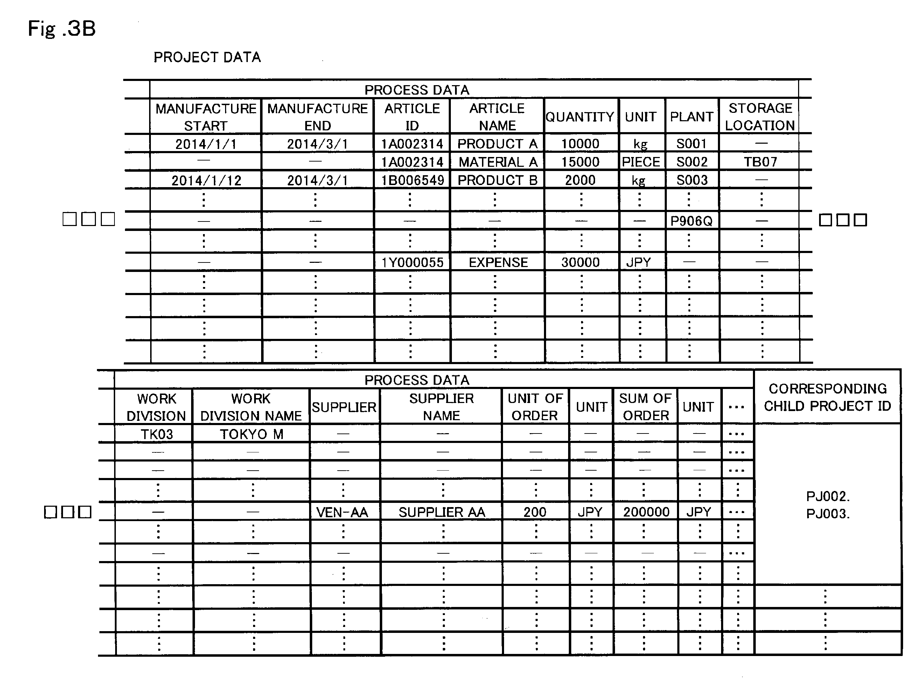

FIG. 3A and FIG. 3B are figures illustrating a constitution example of project data. As illustrated in FIG. 3A and FIG. 3B, the project data contains project ID, project name, order acceptance number, project specification ID, project specification name, process data, and corresponding child projects.

The project ID is information based on which a project is uniquely identified. The project ID according to this embodiment is defined by input to a project outline input screen from the user. The project outline input screen will be detailed later.

The order acceptance number is a number defined at the time of acceptance of an order, and is information based on which contents of order acceptance are uniquely identified.

The project specification ID is information based on which a project specification is uniquely identified. The project specification corresponds to a class in rough divisions of respective elements of business affairs included in the project. Accordingly, the project specification ID is an ID directly allotted to the project ID.

The process data is information defining detailed information for each business process. Each item contained in the process data according to this embodiment is defined by input from the user, or automatic input with reference to report data.

The process data contains "activity class ID", "activity class name", "activity ID", "activity name", "planned cost", "actual cost", "process ID", "process name", "slip number", "purchase due date", "delivery schedule", "manufacture start", "manufacture end", "article ID", "article name", "quantity", "unit of quantity", "plant", "storage location", "work division", "work division name", "supplier", "supplier name", "unit of order", "unit" for unit of order, "sum of order", and "unit" for sum of order.

The "activity class ID" is information based on which an activity class is uniquely identified. The activity class corresponds to a class positioned lower than the class defined as the project specification. Accordingly, the activity class ID is an ID directly allotted to the project specification ID. When the name of a certain activity class is changed, all the names of the activity classes to which the same ID is given are changed accordingly.

The "activity ID" is information based on which an activity is uniquely identified. The activity corresponds to a class positioned lower than the class defined as the activity class ID. The activity ID is directly allotted to the activity class ID. The activity according to this embodiment indicates a framework of a business process (hereinafter referred to as parent business process depending on cases). For example, various types of parent business processes such as design, production, and inspection are allotted to activities. When the name of a certain activity is changed, all the names of activities to which the same ID is given are changed accordingly.

The "process ID" is information based on which a specific business process is uniquely identified. The specific business process (hereinafter referred to as child business process depending on cases) is a process included in the corresponding parent business process. The process ID according to this embodiment is defined based on input from the user. When the process ID is defined based on input from the user, a process name corresponding to the process ID is identified with reference to a not-shown process identification table. Then, the identified process name is input to the corresponding column receiving input of the process name.

Accordingly, the project data management system in this embodiment is configured to define the project specification for the project corresponding to the highest class, define the activity class for the project specification, and define the activity (i.e., design, production, inspection or other parent business processes) for the activity class. Data on a project is managed based on this hierarchical structure.

The "slip number" is information based on which a report is uniquely identified. When a new process is added, a report reflecting the input information is created. In this case, the server 10 identifies a dead number at the time of creation of the report, and allots the identified dead number to the corresponding slip number.

The "planned cost" is information indicating estimated cost to be invested. Accordingly, the planned cost is input before the end of the project.

The "actual cost" is information indicating the sum actually invested at the time of actual completion of the project. Accordingly, the actual cost is input at the time of the end of the process. The actual cost according to this embodiment is input based on input to a performance input screen from the user.

The "purchase due date", "delivery schedule", "manufacture start", and "manufacture end" are date information used for managing respective dates. This date information is input from the user in accordance with the characteristics of the respective projects.

The "article ID" is information based on which an article is uniquely identified. When the article ID is input, an article name corresponding to the article ID is identified with reference to a not-shown article name identification table. The identified article name is automatically input to the corresponding column of the item of the article name.

The business application program DB 17 is a storage medium storing programs used for various types of business affairs. Examples of the programs stored in the business application program DB 17 include a sales task management program, a purchase task management program, a production management program, a financial accounting management program, and a managerial accounting management program.

The report data DB 18 is a storage medium storing various types of report data collected, sorted, or processed in other ways by various types of information processing under various types of business application programs stored in the business application program DB 17. According to this embodiment, the report data DB 18 is a database which stores report data transferred from the core business server 110 in a predetermined format, and is constituted by a plurality of cubes.

Each of the cubes stores report data concerning contents of the corresponding business affair produced in a business process under the corresponding business application program. For example, each of the cubes stores report data concerning contents of the corresponding business affair such as order acceptance slip specifications, shipment slip specifications, delivery slip specifications, and order slip specifications. More specifically, each of the cubes stores data constituted by items generally contained in the corresponding report data (The items include order acceptance slip header information, order acceptance slip specification information, delivery date schedule for voucher data corresponding to order acceptance slip, for example. The items are stored in such a structure that respective items are searchably associated based on keys such as slip numbers. Slip numbers include order acceptance number, order number, shipment number, in- and-out store number, invoice inquiry, bill number, account number, and others).

The project data management server 10 has a function of supplying various types of data stored in the report data DB 18 and the additional DB 10X in accordance with a request from a predetermined external device, i.e., the user terminals 31 to 3N and the enterprise resource planning system 100 according to this embodiment. Accordingly, the project data management server 10 performs a function as a core business server. In other words, the project data management server 10 is equipped with an ERP engine.

According to this embodiment, it is assumed that the project data management server 10 has a function as a DWH server performing various types of functions for realizing a data warehouse, though not shown in the figures. The constitution of the project data management server 10 for performing both the functions as an ERP engine and a DWH server allows the project data management server 10 to supply information to an enterprise resource planning system having a different constitution (for example, an enterprise resource planning system including only a core business server, and an enterprise resource planning system including only a DWH server, as well as the enterprise resource planning system 100) when the information is required by the corresponding enterprise resource planning system.

Each of the user terminals 31 to 3N is constituted by an information processing device, such as an iPad (registered trademark), which includes a CPU (Central Processing Unit), a ROM, a RAM, a display unit and others,. According to this embodiment, it is assumed that each of the user terminals 31 to 3N is equipped with various types of applications such as a web browser, used for handling report data, project data and others. In addition, according to this embodiment, each of the user terminals 31 to 3N has a function of defining queries (search item, search key, extraction key and the like) used for obtaining information about various types of processing authorities (such as project setting screen), project data, process data and the like from the project data management server 10 in accordance with input from the user, for example, and has a function of transmitting the defined queries to the project data management server 10. The RAM included in each of the user terminals 31 to 3N temporarily stores project setting screen information used for displaying the project setting screen, and others.

According to this embodiment, each of the user terminals 31 to 3N has a function of communicating with the project data management server 10 via the relay 20 and the communication network 40, and outputting information obtained from the project data management server 10 to the display unit by a function of software such as a predetermined web application (web browser), for example.

The operation of the project data management system 500 (hereinafter referred to as system 500 depending on cases) according to this embodiment is hereinafter described with reference to the drawings. The operations and processes not particularly relating to the present invention are not described depending on cases.

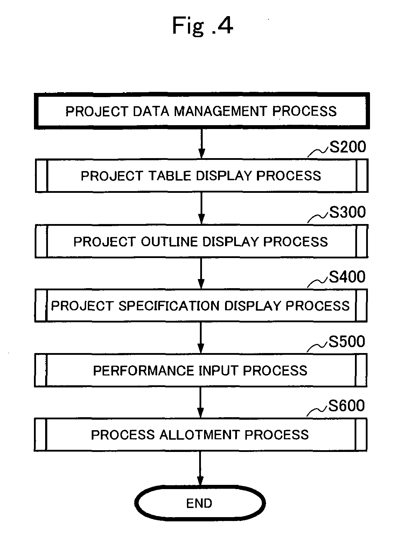

FIG. 4 is a flowchart showing an example of a project data management process executed by the project data management server 10 (hereinafter referred to as server 10 depending on cases) of the system 500 according to this embodiment, and the user terminal 31. The project data management process executes a process for defining data associated with a project and a process for displaying data associated with a project through mutual transmission and reception of various types of information between the server 10 and the user terminal 31, for example. It is assumed herein that the user of the user terminal 31 meets login conditions required by the system 500, and is in the state allowed to use the system 500.

In the project data management process, the system 500 initially executes a project table display process (step S200).

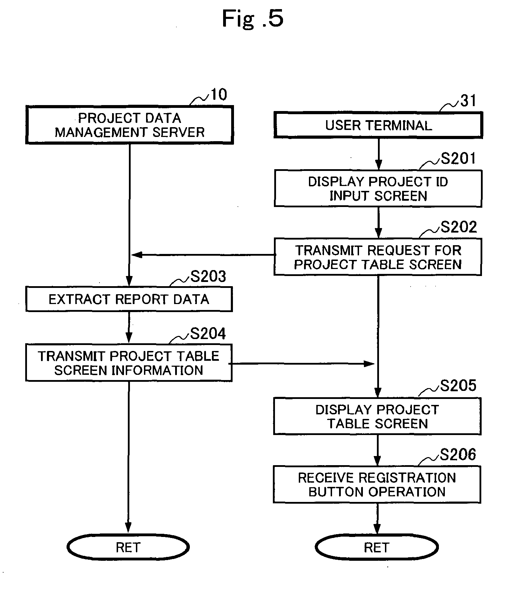

FIG. 5 is a flowchart showing an example of the project table display process. As shown in FIG. 5, the project table display process executes a process for displaying a project table showing a corresponding project on a display screen of the user terminal 31 based on project data stored in the server 10.

In the project table display process, the user terminal 31 initially displays a project ID input screen on the display screen equipped on the user terminal 31 in accordance with operation by the user (step S201). The project ID input screen, which is not shown, is a screen containing an input area for receiving input of a project ID, and a transmission button. When the user presses the transmission button, the user terminal 31 issues a request for transmission of a project table screen 600 to the server 10 while presenting a query containing the input project ID.

After displaying the project ID screen, the user terminal 31 transmits to the server 10 a request for transmission of the project table screen 600 in accordance with an instruction from the user (step S202).

After receiving the request for transmission of the project table screen 600, the server 10 extracts report data associated with the project ID with reference to the presented project ID and report data stored in the report data DB 18 (step S203). According to this embodiment, report data is referred to by the server 10 at the time of extraction of report data. However, project data may be referred to by the server 10 in place of report data.

After extracting report data, the server 10 creates project table display information used for displaying respective elements of the project (such as order acceptance, order, manufacture, delivery, and cost) based on the extracted report data, and transmits the created information to the user terminal 31 (step S204).

After receiving the project table display information, the user terminal 31 displays the project table screen 600 on a display device included in the user terminal 31 based on the received project table display information (step S205).

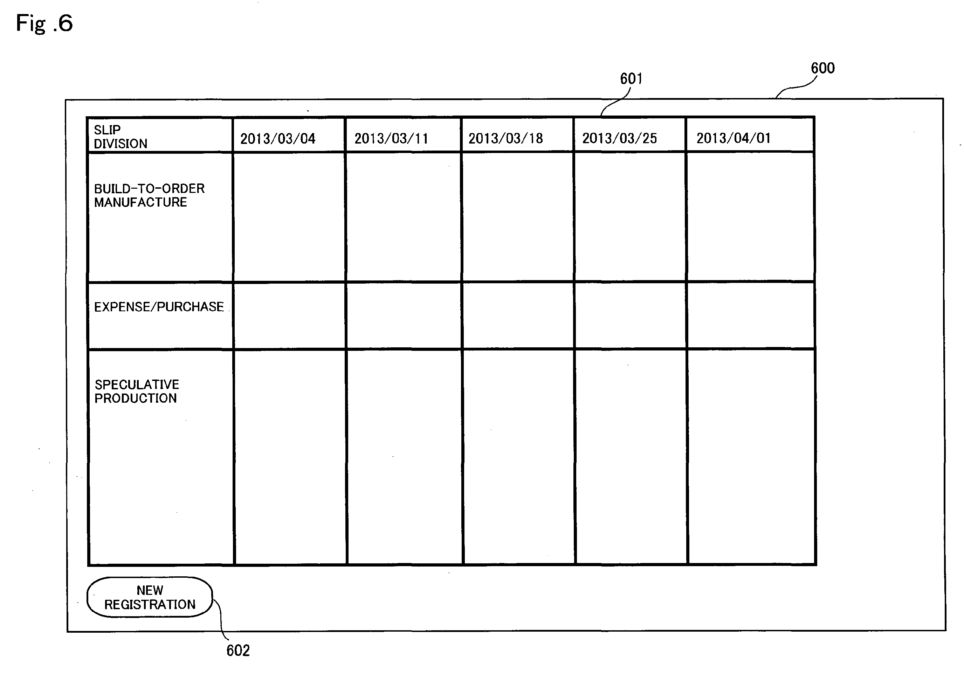

FIG. 6 is a figure illustrating a constitution example of the project table screen 600. As illustrated in FIG. 6, the project table screen 600 contains a project table 601 divided by time and parent business processes, and a registration button 602 for shifting to a screen for registering information associated with the project. Discussed in this embodiment is an example where the project table screen 600 is only displayed for a project for which detailed information is not registered (i.e., project having a project ID for which no report data is present); therefore, nothing is displayed within the frame of the project table 601 on the project table screen 600. In addition, according to this embodiment, the respective processes are divided by week. However, the processes are not required to be divided by week but may be divided by day or month, for example.

After displaying the project table screen 600, the user terminal 31 receives press of the registration button 602 (step S206).

After the user terminal 31 receives operation of the registration button 602, the system 500 ends the project table display process, and returns to the project data management process to execute a project outline display process (step S300).

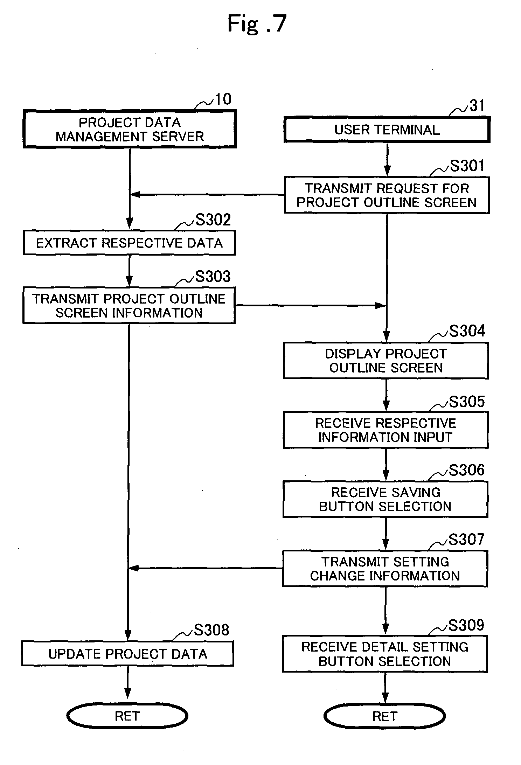

FIG. 7 is a flowchart showing an example of the project outline display process. As shown in FIG. 7, the project outline display process executes a process for displaying an outline of a project, and receiving input of respective items to register a project outline.

In the project outline display process, the user terminal 31 initially issues to the server 10 a request for project outline screen information while presenting a project ID in accordance with operation of the registration button 602 displayed on the project table screen 600 (step S301).

After receiving the request for the project outline screen information, the server 10 extracts data on the project name, project ID, order acceptance number, project specification ID and the like with reference to the presented project ID and project data (step S302).

After extracting the data indicating the outline of the project, the server 10 creates project outline screen information used for setting the outline of the project based on the extracted respective data, and transmits the created information to the user terminal 31 (step S303).

After receiving the project outline screen information, the user terminal 31 displays a project outline screen 800 on the display device included in the user terminal 31 based on the received project outline screen information (step S304).

According to this embodiment, the processes for obtaining the project outline screen information and displaying the project outline screen (steps S301 to S303) are executed after reception of operation of the registration button 602. However, in case that the project data has been extracted with reference to the project data in step S203, and that the project table display information contains outline data indicating the outline of the project, and detailed data indicating the details of the project, the user terminal 31 may be configured to skip steps S301 to S303, and display the project outline screen 800 based on the project table display information after reception of press of the registration button 602.

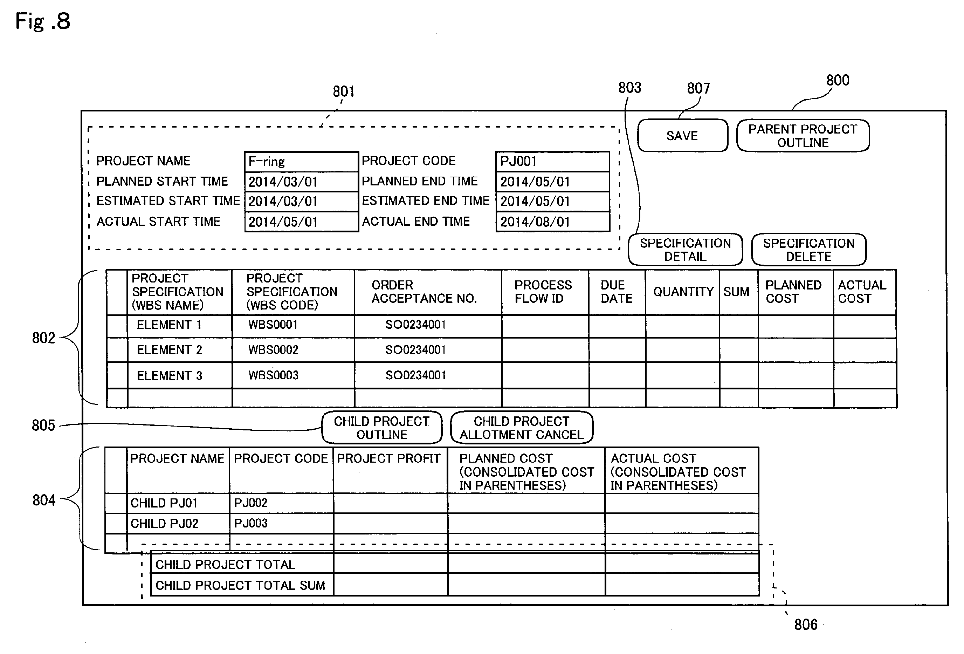

FIG. 8 is a figure illustrating a constitution example of the project outline screen 800. As illustrated in FIG. 8, the project outline screen 800 contains an outline input area 801 for receiving input of various types of information concerning the outline of the project, a specification input table 802 for receiving input of the specification name and specification code of the project, a detail setting button 803 for displaying a project specification screen 1000 receiving input of details of the project, a child project association table 804 for receiving input of information associated with child projects, a child project shift button 805 for shifting to a project setting screen for child projects, a project consolidation information display area 806 for displaying total information about associated projects after consolidation, and a saving button 807 for saving input contents.

The outline input area 801 contains areas capable of receiving input of the project name, project ID, period information, project specification name, project specification ID, order reception number, and other items.

The child project association table 804 displays child project IDs based on which child projects are uniquely identified.

The project consolidation information display area 806 displays total information about associated projects after consolidation. More specifically, the project consolidation information display area 806 extracts profit information from all project IDs of associated projects, and displays extracted total profit information so as to provide information about consolidated profits of the project and all the associated projects.

After displaying the project outline screen 800, the user terminal 31 receives from the user input of respective information to the outline input area 801, the specification input table 802, the child project association table 804, and others (step S305).

After receiving input of respective information to the outline input area 801 or the child project association table 804, the user terminal 31 stores the input contents in a temporary storage device included in the user terminal 31, and further receives selection of the saving button 807 (step S306).

After receiving selection of the saving button 807, the user terminal 31 transmits to the server 10 setting change information indicating contents of input to the project outline screen 800 (step S307).

After receiving the setting change information, the server 10 updates project data based on the setting change information (step S308).

After the server 10 updates the project data in accordance with selection of the saving button 807 by the user, the user terminal 31 further receives press of the detail setting button 803 from the user (step S309).

After the user terminal 31 receives selection of the detail setting button 803, the system 500 ends the projects outline display process, and shifts to a project specification display process (step S400).

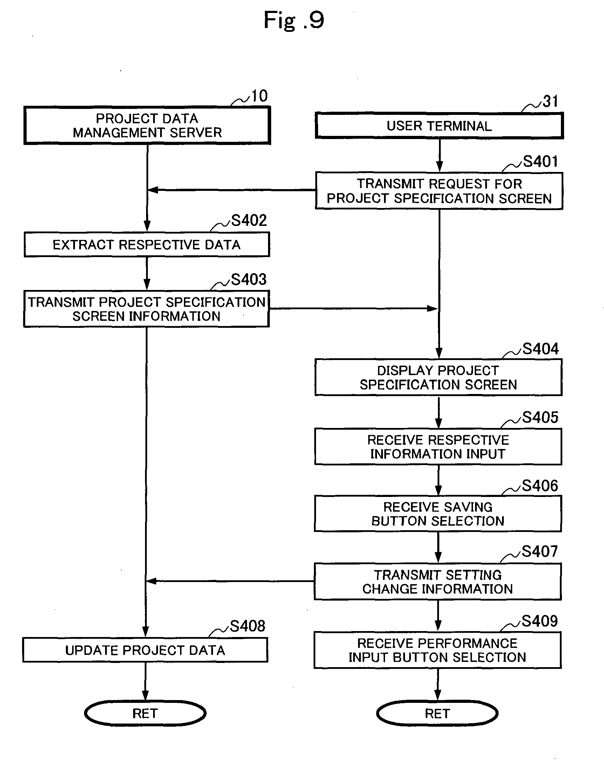

FIG. 9 is a flowchart showing an example of the project specification display process. As shown in FIG. 9, the project specification display process executes a process for displaying detailed information about the project, and receiving and registering input to respective items while presenting the information for viewing.

In the project specification display process, the user terminal 31 initially issues to the server 10 a request for transmission of information used for displaying the project specification screen 1000 while presenting the project specification ID (step S401).

After receiving the request for transmission of the information used for displaying the project specification screen 1000 from the user terminal 31, the server 10 extracts project data corresponding to the project specification ID with reference to the project specification ID and the project data (step S402).

After extracting the project data, the server 10 creates project specification screen information used for displaying the project specification screen 1000 based on the extracted project data, and transmits the created information to the user terminal 31 (step S403).

After receiving the project specification screen information, the user terminal 31 displays the project specification screen 1000 on the display device included in the user terminal 31 based on the received project specification screen information (step S404).

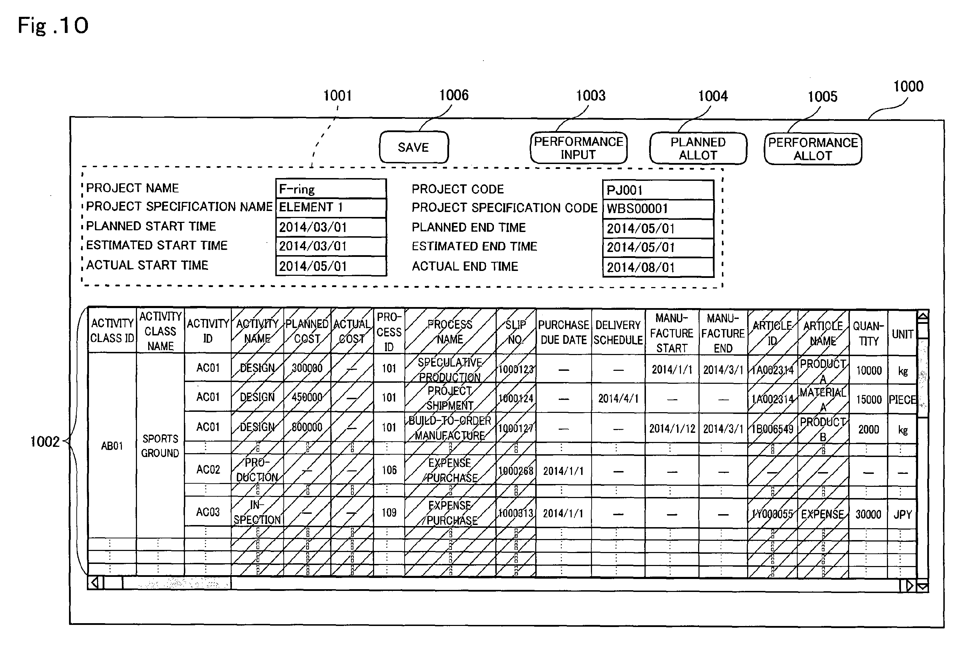

FIG. 10 is a figure illustrating a constitution example of the project specification screen 1000. As illustrated in FIG. 10, the project specification screen 1000 contains a project outline display area 1001, a specification table 1002, a performance input button 1003, a planned allotment button 1004, a performance allotment button 1005, and a saving button 1006.

The specification table 1002 contains various types of items indicating the specifications of the project. More specifically, the specification table 1002 contains "activity class ID", "activity class name", "activity ID", "activity name", "planned cost", "actual cost", "process ID", "process name", "slip number", "purchase due date", "delivery schedule", "manufacture start", "manufacture end", "article ID", "article name", "quantity", "unit of quantity", "plant", "storage location", "work division", "work division name", "supplier", "supplier name", "unit of order", "unit" for unit of order, "sum of order", and "unit" for sum of order. The white columns in the specification table 1002 are portions to which various types of numerals, names and the like are to be input from the user.

The performance input button 1003 is a button provided for displaying a screen which receives input of the actual cost. More specifically, the user can input performance by selecting the performance input button 1003. According to this embodiment, the performance input button is configured to be provided only on the project specification screen 1000. However, the performance input button may be provided on the project table screen 400 or the project outline screen 800 as well.

The planned allotment button 1004 is a button provided for displaying a screen for allotting report data to a project, which data has been already allotted to a different project. According to this embodiment, the planned allotment button is provided only on the project specification screen 1000. However, the planned allotment button may be provided on the project table screen 400 or the project outline screen 800 as well.

The performance allotment button 1005 is a button provided for displaying a screen for allotting report data containing input of actual cost to a project, which data has been already allotted to a different project. According to this embodiment, the performance allotment button is provided only on the project specification screen 1000. However, the performance allotment button may be provided on the project table screen 400 or the project outline screen 800 as well.

After displaying the project specification screen 1000, the user terminal 31 receives input to the project specification screen 1000 from the user (step S405). More specifically, the user terminal 31 receives input of the process ID, input of timing information and the like.

The respective information input to the specification table 1002 is stored in the temporary storage device included in the user terminal 31. Then, the user terminal 31 receives press of the saving button 1006 (step S406).

After receiving selection of the saving button 1006, the user terminal 31 transmits to the server 10 setting change information indicating contents of input to the project specification screen 1000 (step S407).

After receiving the setting change information, the server 10 updates the project data based on the setting change information (step S408).

After transmitting the setting change information used for updating the project data, the user terminal 31 receives press of the performance input button 1003 from the user (step S409).

After the user terminal 31 receives press of the performance input button 1003, the system 500 ends the project specification display process, and executes a performance input process (step S500).

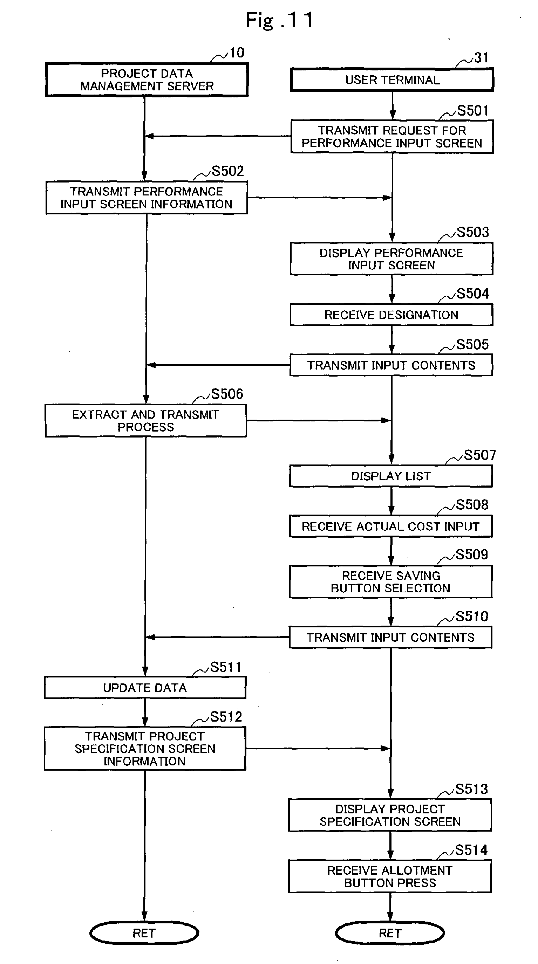

FIG. 11 is a flowchart showing an example of the performance input process. As shown in FIG. 11, the performance input process executes a process for inputting actual cost to a performance input screen 1200 displayed on the user terminal 31 for respective child business processes (activities).

In the performance input process, the user terminal 31 initially issues to the server 10 a request for transmission of information used for displaying the performance input screen 1200 in accordance with press of the performance input button 1003 (step S501).

After receiving the request for transmission of information used for displaying the performance input screen 1200, the server 10 transmits to the user terminal 31 performance input screen information used for displaying the performance input screen 1200 (step S502).

After receiving the performance input screen information, the user terminal 31 displays the performance input screen 1200 on the display device included in the user terminal 31 based on the transmitted performance input screen information (step S503). According to this embodiment, the performance input screen 1200 is displayed based on reception of the performance input screen information from the server 10. However, the user terminal 31 may display the performance input screen 1200 on the display device included in the user terminal 31 based on screen information stored in the user terminal 31 beforehand for displaying the performance input screen.

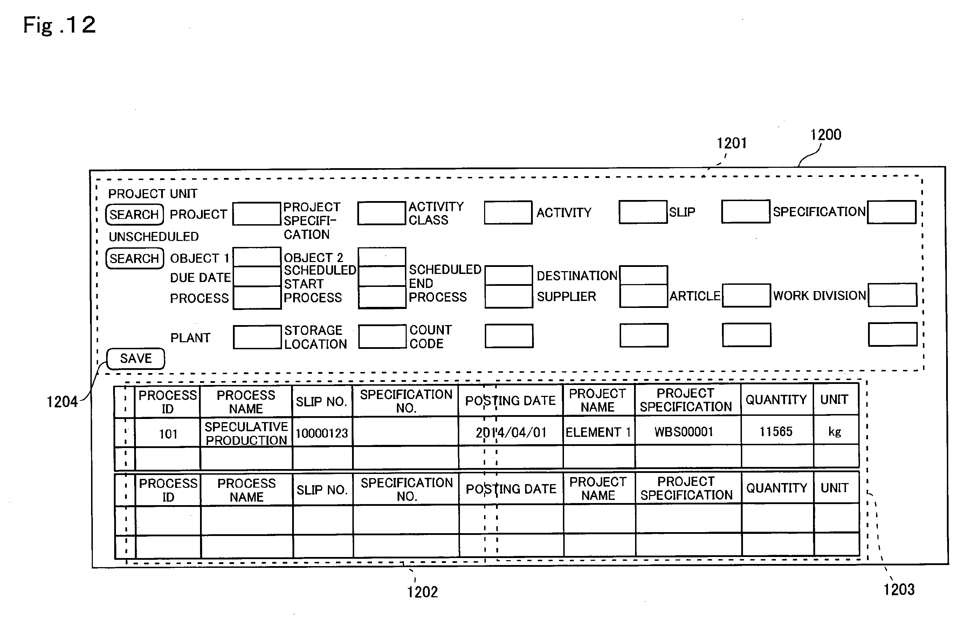

FIG. 12 is a figure illustrating a constitution example of the performance input screen 1200. As illustrated in FIG. 12, the performance input screen 1200 contains a search condition input area 1201, a child business process list display area 1202, a performance input area 1203, and a saving button 1204.

The search condition input area 1201 is an area for receiving input of conditions based on which child business processes are searched. The child business processes herein are processes whose performance is desired to be input. The search condition input area 1201 is configured to receive designations of respective items defined in the project data, such as project ID and project name.

After displaying the performance input screen 1200 on the display device included in the user terminal 31, the user terminal 31 receives input (designation of conditions) to the search condition input area 1201 (step S504).

After receiving the input, the user terminal 31 transmits contents of the input to the server 10 (step S505).

After receiving the contents of the input, the server 10 extracts child business processes corresponding to the received contents of the input, and transmits information about the extracted child business processes to the user terminal 31 (step S506).

After receiving information about the extracted child business processes, the user terminal 31 displays a list of the child business processes in the child business process list display area 1202 with reference to the corresponding information (step S507).

After displaying the list of the child business processes, the user terminal 31 receives selection of a desired child business process, and input of the actual cost of the selected child business process (step S508).

After receiving the input of the actual cost, the user terminal 31 receives press of the saving button 1204 (step S509).

After receiving the press of the saving button 1204, the user terminal 31 transmits information about the input actual cost to the server 10 (step S510).

After receiving information about the actual cost, the server 10 updates the project data with reference to the received information about the actual cost (step S511).

After updating the project data based on reception of the press of the saving button 1204 by the user terminal 31, the server 10 creates project specification screen information based on the updated project data, and transmits the created information to the user terminal 31 (step S512).

After receiving the project specification screen information created based on the updated project data, the user terminal 31 displays a project specification screen 1300 to which the actual cost has been input based on the updated project specification screen information (step S513).

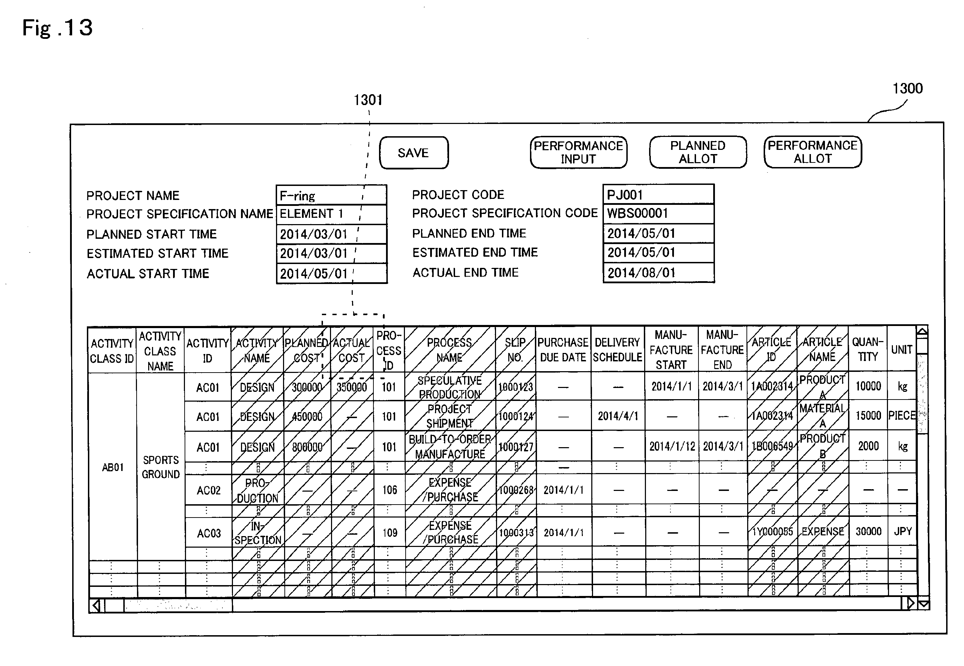

FIG. 13 is a figure illustrating a constitution example of the updated project specification screen 1300. As illustrated in FIG. 13, an actual cost column 1301 displayed on the project specification screen 1300 reflects the actual cost input in the performance input process.

After displaying the project specification screen 1300 to which the actual cost has been input, the user terminal 31 receives from the user press of either the planned allotment button 1004 or the performance allotment button 1005 for executing a process allotment process (step S514).

After the user terminal 31 receives the press of either the planned allotment button 1004 or the performance allotment button 1005, the system 500 ends the performance input process, and executes the process allotment process.

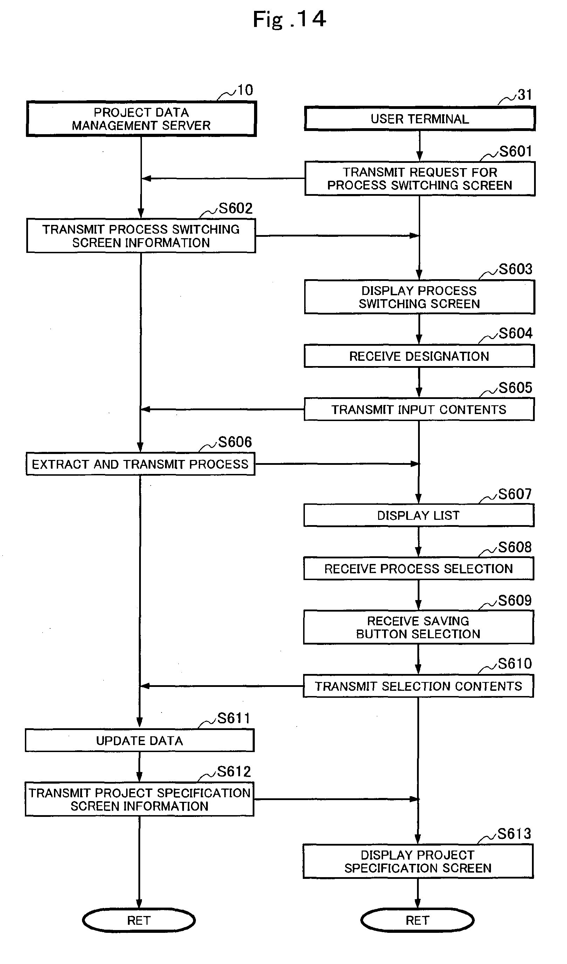

FIG. 14 is a flowchart showing an example of the process allotment process. As shown in FIG. 14, the process allotment process according to this embodiment executes a process for allotting process data to a project, which data has been already allotted to a different project (process for allotment switching).

The process data according to this embodiment includes two types: "planned slip" containing only input of planned cost prior to completion of the process, and "performance slip" containing input of actual cost after completion of the process. According to this embodiment, an allotment process for the "planned slip" is executed when the planned allotment button 1004 is pressed. On the other hand, an allotment process for the "performance slip" is executed when the performance allotment button 1005 is pressed. The contents of both the allotment processes are not considerably different except for different items displayed in the search condition input area; therefore, only execution of the allotment process for the "planned slip" is touched upon herein as an example.

In the process allotment process, the user terminal 31 initially issues to the server 10 a request for transmission of information used for displaying a process switching screen 1500 in accordance with press of the planned allotment button 1004 (step S601).

After receiving the request for transmission of information used for displaying the process switching screen 1500, the server 10 transmits to the user terminal 31 process switching screen information used for displaying the process switching screen 1500 (step S602).

After receiving the process switching screen information, the user terminal 31 displays the process switching screen 1500 on the display device included in the user terminal 31 based on the transmitted process switching screen information (step S603). According to this embodiment, the process switching screen 1500 is displayed based on reception of the process switching screen information from the server 10. However, the user terminal 31 may be configured to display the process switching screen 1500 on the display device of the user terminal 31 based on screen information stored beforehand in the user terminal 31 for displaying the process switching screen.

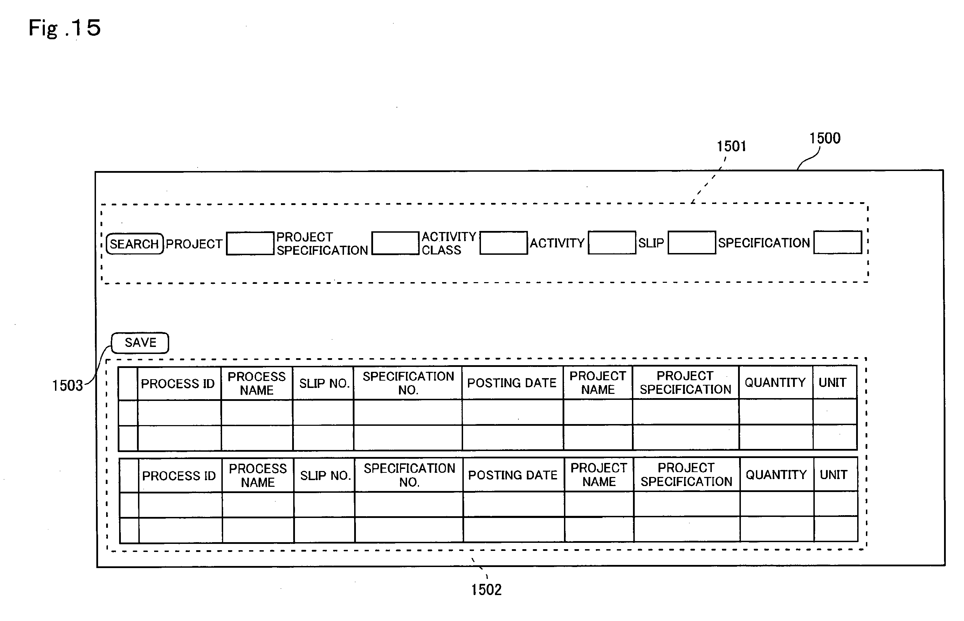

FIG. 15 is a figure illustrating a constitution example of the process switching screen 1500. As illustrated in FIG. 15, the process switching screen 1500 contains a search condition input area 1501, a child business process list display area 1502, and a saving button 1503.

The search condition input area 1501 is an area for receiving input of conditions based on which child business processes are searched. The child business processes herein are processes for which allotment switching is desired. The search condition input area 1501 is an area provided for extraction of process data based on keys of information defined as items associated with the project data, such as project ID, project name, activity class, activity, and slip. Accordingly, the search condition input area 1501 contains input areas for items.

After displaying the process switching screen 1500 on the display device of the user terminal 31, the user terminal 31 receives input (designation of conditions) to the search condition input area 1501 (step S604).

After receiving the input, the user terminal 31 transmits contents of the input to the server 10 (step S605).

After receiving the contents of the input, the server 10 extracts child business processes corresponding to the received contents of the input, and transmits information about the extracted child business processes to the user terminal 31 (step S606).

After receiving the information about the extracted child business processes, the user terminal 31 displays a list of the child business processes in the child business process list display area 1502 with reference to the corresponding information (step S607).

After displaying the list of the child business processes, the user terminal 31 receives selection of a desired child business process (step S608).

After receiving the selection, the user terminal 31 receives press of the saving button 1503 (step S609).

After receiving the press of the saving button 1503, the user terminal 31 transmits information about the selected child business process to the server 10 (step S610).

After receiving the information about the child business process, the server 10 updates project data with reference to the received information about the child business process (step S611). More specifically, the server 10 deletes the received child business process from the project to which the corresponding child business process belongs prior to reception of the information, and newly adds the deleted child business process to the project newly displayed on the project specification screen 1000 by the user with correspondence between the added child business process and the newly displayed project to update the project data.

After updating the project data based on reception of the press of the saving button 1503 by the user terminal 31, the server 10 creates project specification screen information based on the updated project data, and transmits the created information to the user terminal 31 (step S612).

After receiving the project specification screen information created based on the updated project data, the user terminal 31 displays a project specification screen to which the allotment process has been reflected based on the project specification screen information, and ends the allotment process (step S613).

After ending the allotment process, the system 500 ends the project data management process, and closes the displayed screen.

Discussed in this embodiment is an example of the process allotment process in which process data registered for a different project is allotted to a project desired by the user. However, the process allotment process may be practiced otherwise. For example, the server 10 may be configured to extract process data not yet allotted to any project, and allot the extracted process data to the project desired by the user. More specifically, the server 10 may be configured to include a process data DB storing process data not yet associated with project data, and supply to the user terminal 31 allotment screen information used for allotting process data in accordance with a request from the user. Then, the server 10 may receive input contents information from the user terminal 31 displaying an allotment screen on the display screen included in the user terminal 31 based on the allotment screen information. This input contents information shows contents of process allotment by the user for allotting a process to a corresponding project. Thereafter, the server 10 may update project data based on the received input contents information. In this case, the process data stored in the process data DB is registered based on input to a process data registration screen from the user, for example.

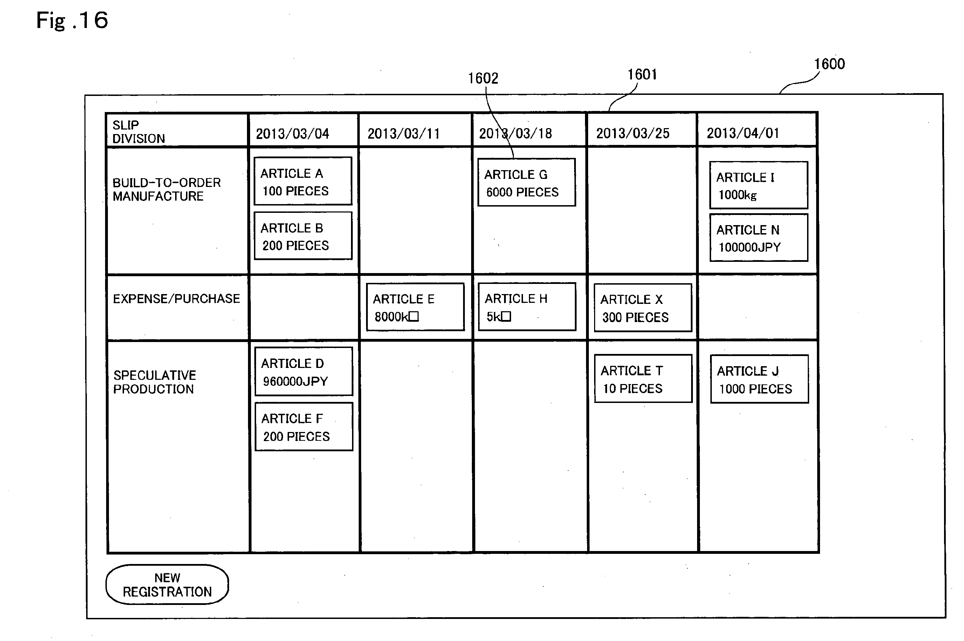

FIG. 16 is a figure illustrating a constitution example of a project table screen 1600 displaying project data to which process data has been input by the foregoing project data management process. While not particularly discussed in this embodiment, the project table screen 1600 which displays project data containing input of the process data may be viewed by the following method. For viewing the project table screen 1600, the user again inputs, in step S201 after the input of the process data, the project ID associated with the project which corresponds to the input of the process data. Alternatively, the project table screen 1600 displaying the project data containing the input of the process data may be viewed by using a button provided on the project specification display screen for viewing the project table screen.

As illustrated in FIG. 16, the project table screen 1600 contains a project table 1601, and mesh data 1602 indicating respective child business processes. The mesh data 1602 is provided within the project table 1601.

The mesh data 1602 displays data such that the types of elements included in the respective child business projects are recognizable. More specifically, the mesh data 1602 displays information about the quantities, customers, organizations in charge, and others for the corresponding child business processes.

The system 500 in the foregoing embodiment displays the project outline screen in the project outline display process, and displays the project specification screen in the project specification display process. However, the system 500 is not limited to this example. The system 500 may be configured to execute a process which combines the project outline display process and the project specification display process. In other words, the project outline screen may be contained in the project specification screen. In this case, the project specification screen is configured to have a particular function for displaying the project outline screen.

According to this embodiment, the processes are executed in the order of the project table display process, the project outline display process, the project specification display process, the performance input process, and the process allotment process. However, the processes are not required to be executed in this order. The system 500 may be configured to execute the entire processes in an arbitrary order during execution of the project data management process.

As described above, the project data management server 10 according to the foregoing embodiment is a server for operation of ERP, and provides and manages data on a project via the communication network (40, 51) in accordance with a request issued from the user terminal 31 used by the user. The server 10 includes the project data DB 16 storing project data containing a project ID based on which a project produced in a business affair is uniquely identified, process IDs based on which a plurality of business processes constituting the project are uniquely identified, and process data indicating detailed contents of the corresponding business processes such that the project ID, the process IDs, and the process data are associated with each other. The server 10 supplies to the user terminal 31 project setting screen information used for setting various types of information about a project with reference to the project data in accordance with a request from the user, receives input contents information from the user terminal 31 displaying the project setting screen (800, 1000) on the display screen of the user terminal 31 based on the project setting screen information, which input contents information indicates contents of input to the project setting screen (800, 1000) from the user, and updates the project data based on the received input contents information. The project setting screen (800, 1000) contains the business process list display area (1002) which is an area displaying a list of a plurality of business processes constituting the project, and contains input areas to which detailed items for each business process are input. This constitution allows the user to recognize details of the business processes for each project. This constitution further allows the user to register the detailed items on the screen on which the details of the business processes are recognizable. Accordingly, this constitution considerably improves user-friendliness, and realizes allotment and display of data desired by the user by simplified processing without the necessity of complicated selection.

More specifically, this constitution allows display of various business processes of one project on one individual user interface, and allows registration of process data associated with the various business processes without the necessity of displaying the process data on separate screens. Accordingly, the foregoing system allows creation of process data indicating details of plural business processes included in one project as a collection of data for each project in managing these business processes. Accordingly, this constitution improves user-friendliness, and facilitates registration, display, and management processing of data performed by the project data management server.

The project data management server 10 according to the foregoing embodiment receives input contents information from the user terminal 31 having received process data registration. This input contents information contains contents of the process data registration. Then, the server 10 creates process data based on the received input contents information containing the contents of the process data registration, and registers in the project data the created process data in association with a corresponding project. This constitution further allows registration and display of the process data without the necessity of providing screen information for registration and display of the process data for each of the business processes. Accordingly, the project data management server 10 achieves registration, display, and management of data desired by the user by simplified processing.

The project data according to the foregoing embodiment is further associated with child projects indicating projects associated with a corresponding project. The project setting screen (such as project outline screen 800) contains a child project list display area (such as child project association table 804) displaying a list of the child projects. The project setting screen information used for setting various types of information about the child projects is supplied to the user terminal 31 in accordance with a request from the user terminal 31 having received selection of the desired child project. This configuration allows recognition of projects deriving from a corresponding project. Accordingly, this configuration allows setting of various information based on longitudinal recognition of a project, thereby improving user-friendliness.

The project setting screen (such as project outline screen 800) according to the foregoing embodiment contains the project consolidation information display area 806 displaying data on at least one of a profit, a planned cost corresponding to an estimated cost for investment, and an actual cost corresponding to an invested sum after completion of the corresponding process, as data after consolidation of associated projects containing the child projects. This configuration allows display of overall information about a plurality of associated projects without the necessity of complicated operation, and the necessity of display of individual and specific screens.

The project data management server 10 according to the foregoing embodiment supplies to the user terminal 31 performance input screen information used for inputting performance data (such as actual cost) in accordance with a request from the user, receives input contents information from the user terminal 31 displaying a performance input screen on the display screen of the user terminal 31 based on the performance input screen information. This input contents information indicates contents of performance input to the performance input screen from the user for respective business processes. Then, the server 10 updates the project data based on the received input contents information. This configuration needs only one screen for input of performance data from the user for all processes included in one process. Accordingly, the project data management server 10 improves user-friendliness, and also achieves registration and display of data by simplified processing.

The project data management server 10 according to the foregoing embodiment may be configured to include a process data DB storing process data not associated with project data (not-allotted process data). The server 10 may be configured to supply to the user terminal 31 allotment screen information used for allotting process data in accordance, and receive input contents information from the user terminal 31 displaying the allotment screen on the display screen of the user terminal 31 based on the allotment screen information. This input contents information indicates contents of process allotment performed by the user for allotting a process to a corresponding project. Then, the server 10 may be configured to update the project data based on the received input contents information. This configuration allows the user to register a process without definition when the process needs to be executed without determination of a project to which the process is to be allotted, and allows display of process data for allotting the process to easier processing at the time of later allotment of the process to a project. Moreover, this configuration allows allotment to a project by simplified processing.

The project data management server 10 according to the foregoing embodiment supplies to the user terminal 31 process switching screen information with reference to the process data, which information is used for switching a process constituting a corresponding project to a different project in accordance with a request from the user, and receives input contents information from the user terminal 31 displaying the process switching screen 1500 on the display screen of the user terminal 31 based on the process switching screen information. This input contents information indicates selection input to a process switching screen from the user for selecting a business process already allotted to a different project. Then, the server 10 updates the project data based on the received input contents information. This configuration allows effective use of data already registered. More specifically, this configuration allows effective use of existing data without the necessity of temporary deletion of registered data and re-registration of the data when planned or performance data on a process already allotted to a corresponding project is shifted to a different project. Accordingly, this configuration reduces processing burdens imposed on the project data management server 10, and also improves user-friendliness.

The project data management server 10 according to the foregoing embodiment supplies to the user terminal 31 project table screen information with reference to the project data in accordance with a request from the user presenting the project ID. This project table screen information is used for displaying the project table screen 600 displaying a list of the process data. The project table screen 600 contains a process data list display area displaying a list of outlines of updated latest process data for each property of business processes. This configuration allows first-glance recognition of states of business processes with respect to a project, thereby improving user-friendliness.

The present invention offers advantageous effects in managing project data in a business system (ERP system) which manages data for defining information about organizations, and data for defining authorities given to respective organizations.

## Claims

1. A project data management server which is a server for operation of ERP, and provides and manages data on a project via a communication network in accordance with a request issued from a user terminal used by a user, comprising:
a project data storing unit storing project data containing a project ID based on which a project produced in a business affair is uniquely identified, process IDs based on which a plurality of business processes constituting the project are uniquely identified, and process data indicating detailed contents of the corresponding business processes such that the project ID, the process IDs, and the process data are associated with each other;
a project setting screen information supplying unit supplying to the user terminal project setting screen information used for setting various types of information about a project with reference to the project data in accordance with a request from the user;
an input contents information receiving unit receiving input contents information from the user terminal displaying a project setting screen on a display screen of the user terminal based on the project setting screen information, the input contents information indicating contents of input to the project setting screen from the user; and
a data updating unit updating the project data based on the received input contents information, wherein
the project setting screen contains a business process list display area which is an area displaying a list of a plurality of business processes constituting the project, and contains input areas to which detailed items for each business process are input.

2. The project data management server according to claim 1, further comprising:
a process data registering unit creating and registering the process data, wherein
the input contents information receiving unit receives input contents information from the user terminal having received process data registration, the input contents information containing contents of the process data registration, and
the process data registering unit creates the process data based on the received input contents information containing the contents of the process data registration, and registers in the project data the created process data in association with a corresponding project.

3. The project data management server according to claim 1, wherein
the project data is further associated with child projects indicating projects associated with a corresponding project,
the project setting screen contains a child project list display area displaying a list of the child projects, and
the project setting screen information supplying unit supplies to the user terminal project setting screen information used for setting various types of information about the child projects in accordance with a request from the user terminal having received selection of the desired child project.

4. The project data management server according to claim 3, wherein the project setting screen contains a project consolidation information display area displaying data on at least one of a profit, a planned cost corresponding to an estimated cost for investment, and an actual cost corresponding to an invested sum after completion of the corresponding process, as data after consolidation of associated projects containing the child projects.

5. The project data management server according to claim 1, further comprising:
a performance input screen information supplying unit supplying to the user terminal performance input screen information used for inputting performance data in accordance with a request from the user, wherein
the input contents information receiving unit further receives input contents information from the user terminal displaying a performance input screen on the display screen of the user terminal based on the performance input screen information, the input contents information indicating contents of performance input to the performance input screen from the user for respective business processes, and
the data updating unit updates the project data based on the received input contents information.

6. The project data management server according to claim 1, further comprising:
a process allotment screen information supplying unit supplying to the user terminal process allotment screen information used for allotting registered process data to a project with reference to the process data in accordance with a request from the user, wherein
the input contents information receiving unit further receives input contents information from the user terminal displaying a process allotment screen on the display screen of the user terminal based on the process allotment screen information, the input contents information indicating contents of business process selection input to the process allotment screen from the user, and
the data updating unit updates the project data based on the received input contents information.

7. The project data management server according to claim 1, further comprising:
a process data storing unit storing the process data not associated with the project data; and
an allotment screen information supplying unit supplying to the user terminal allotment screen information used for allotting process data in accordance with a request from the user, wherein
the input contents information receiving unit further receives input contents information from the user terminal displaying an allotment screen on the display screen of the user terminal based on the allotment screen information, the input contents information indicating contents of process allotment input to the allotment screen from the user for allotting a process to a corresponding project, and
the data updating unit updates the project data based on the received input contents information.

8. The project data management server according to claim 1, further comprising:
a project table screen information supplying unit supplying to the user terminal project table screen information used for displaying a project table screen showing a list of the process data with reference to the project data in accordance with a request from the user presenting the project ID, wherein
the project table screen contains a process data list display area displaying a list of outlines of latest process data updated by the data updating unit for each property of business processes.

9. A non-transitory computer-readable medium including a project data management program which allows operation of ERP, and allows a project data management server to provide and manage data on a project via a communication network in accordance with a request issued from a user terminal used by a user, under the project data management program the project data management server, which includes a project data storing unit storing project data containing a project ID based on which a project produced in a business affair is uniquely identified, process IDs based on which a plurality of business processes constituting the project are uniquely identified, and process data indicating detailed contents of the corresponding business processes such that the project ID, the process IDs, and the process data are associated with each other, executes
a project setting screen information supplying process supplying to the user terminal project setting screen information used for setting various types of information about a project with reference to the project data in accordance with a request from the user,
an input contents information receiving process receiving input contents information from the user terminal displaying a project setting screen on a display screen of the user terminal based on the project setting screen information, the input contents information indicating contents of input to the project setting screen from the user, wherein the project setting screen contains a business process list display area which is an area displaying a list of a plurality of business processes constituting the project, and contains input areas to which detailed items for each business process are input, and
a data updating process updating the project data based on the received input contents information.
